# EUROPÄISCHE PATENTSCHRIFT

(11) **EP 3 546 136 B1**
(45) Veröffentlichungstag und Bekanntmachung des Hinweises auf die Patenterteilung: **13.01.2021**
(21) Anmeldenummer: 18165105.0
(22) Anmeldetag: 29.03.2018
(51) Int. Cl.: B25J 9/16, G05B 9/02, G05B 19/042, G05B 19/048, G06T 19/00

(54) **AUGMENTED-REALITY-SYSTEM**
AUGMENTED REALITY SYSTEM
SYSTÈME DE RÉALITÉ AUGMENTÉE

(43) Veröffentlichungstag der Anmeldung: 02.10.2019
(73) Patentinhaber: SICK AG, 79183 Waldkirch (DE)
(72) Erfinder: Haberstroh, Frank, 79183 Waldkirch (DE); Felix, Schwer, 79104 Freiburg (DE)

(56) Entgegenhaltungen:
- WO-A1-2009/063318
- US-A1- 2016 205 355
- US-A1- 2017 043 484

## Beschreibung

Die Erfindung betrifft ein Augmented-Reality-System zur Überlappung einer erweiterten Realität mit einer realen Umgebung gemäß den Merkmalen des Anspruchs 1. Im Folgenden wird das Augmented-Reality-System auch als AR-System bezeichnet.

Das AR-System wird in unterschiedlichsten Anwendungsgebieten eingesetzt. In der heutigen Industrie wird das AR-System beispielsweise eingesetzt, um einem Anwender eine Abbildung der realen Umgebung zusammen mit einer erweiterten Realitätsabbildung darzustellen, so dass der Anwender auf einfachste Weise eine mögliche Abweichung zwischen der realen Abbildung und der erweiterten Realitätsabbildung erkennen kann. Hieraus kann ein Anwender, der das AR-System benutzt, unterschiedlichste Informationen entnehmen und entsprechenden Maßnahmen ergreifen.

Beispielsweise erfasst das AR-System eine komplexe reale Verschaltung eines Steuerschrankes als reale Umgebung und überlappt die Abbildung der realen Verschaltung mit einer berechneten virtuellen Verschaltung des Steuerschrankes als erweiterte Realitätsabbildung. Aus der Überlappung kann der Anwender eine fehlerhafte Verschaltung oder eine verbesserte Verschaltung als die Abweichung zwischen der realen und virtuellen Verschaltung ersehen, so dass der Anwender anhand der dargestellten Abweichung die fehlerhafte Verschaltung korrigieren oder die verbesserte Verschaltung verknüpfen kann.

Das AR-System ermöglicht somit dem Anwender eine statische reale Umgebung mit erweiterter Realität wahrzunehmen und die reale Umgebung gegebenenfalls zu verändern.

Aus US 2017/043484 A1 ist ein Augmented-Reality-System gemäß den Merkmalen des Oberbegriffs des Anspruchs 1 bekannt.

Es ist eine Aufgabe der Erfindung, ein Augmented-Reality-System bzw. AR-System zur Überlappung einer virtuellen Realität mit einer realen Umgebung derart zu verbessern, dass eine hohe Bewegungsfreiheit einer Person in einem Betrieb mit dem AR-System erzielbar ist.

Die Aufgabe wird erfindungsgemäß gelöst durch ein Augmented-Reality-System zur Überlappung einer erweiterten Realität mit einer realen Umgebung, umfassend die Merkmale des Anspruchs 1.

Dies hat den Vorteil, dass der Anwender im Voraus die notwendige Information erhält, wo er sich in Bezug zu der zukünftigen realen Umgebung befinden wird, so dass er eine mögliche Kollision mit dem Arbeitsbereich der Überwachungseinheit bzw. mit der Arbeitseinheit sehen und vermeiden kann.

Gemäß einem bevorzugten Ausführungsbeispiel umfasst das Augmented-Reality-System eine Brille, ein Helmdisplay oder ein elektronisches Kommunikationsgerät, insbesondere ein Smartphone oder ein Touchpad, so dass der Anwender das Augmented-Reality-System einfach und handlich benutzen kann. Hierbei können vorteilhafterweise mehrere Augmented-Reality-Systeme miteinander vernetzt sein, so dass mehrere Anwender mit ihren jeweiligen Augmented-Reality-Systemen gleichzeitig eine Umgebung begehen können, wobei alle Anwender in den Augmented-Reality-Systemen angezeigt werden. Hierbei kann vorteilhafterweise die Steuereinheit in die Brille, dem Helmdisplay oder dem elektronischen Kommunikationsgerät integriert sein. Vorzugsweise kann die Steuereinheit als separate Rechnereinheit angeordnet sein, die die Überlappung der momentanen und virtuellen Abbildung errechnet und an die Anzeigeeinheit übermittelt. Mit anderen Worten, die Steuereinheit umfasst vorteilhafterweise eine CPU.

Gemäß einem weiteren bevorzugten Ausführungsbeispiel umfasst die Erfassungseinheit eine, insbesondere eine Raumtiefe erfassende, Kamera und/oder Weitwinkel-Kamera. Vorteilhafterweise umfasst die Überwachungseinheit eine, insbesondere eine Raumtiefe erfassende, Überwachungskamera, einen Scanner, ein Lichtgitter oder eine Lichtschranke. Hierdurch erhält der Anwender den Vorteil, dass er den Arbeitsbereich, insbesondere einen Schutzraum und einen Überwachungsraum, der Überwachungseinheit dargestellt bekommt und diesen Arbeitsbereich umgehen bzw. meiden kann. Dadurch ist eine höhere Verfügbarkeit der Arbeitseinheit möglich, da der Anwender eine unbeabsichtigte Verlangsamung oder gar Abschaltung der Arbeitseinheit durch Umgehen bzw. Meiden des Arbeitsbereichs der Überwachungseinheit vermeiden kann. Alternativ zu einer Kamera kann die Position des Anwenders anhand von Geolocationsdaten (GPS) bzw. Indoor-GPS bestimmt und an die Steuereinheit übermittelt werden. Hierzu umfasst das Augmented-Reality-System vorzugsweise eine entsprechende GPS-Sender-Empfängereinheit.

Weiterhin umfasst gemäß einem bevorzugten Ausführungsbeispiel die Arbeitseinheit einen Roboter, ein fahrerloses Transportsystem oder eine Verarbeitungsmaschine.

Gemäß einem weiteren bevorzugten Ausführungsbeispiel liegt der zukünftige Zeitpunkt in mehreren Sekunden in der Zukunft, nachdem sich der aktuelle Arbeitsbereich der Überwachungseinheit in eine zukünftige Position des Arbeitsbereichs der Überwachungseinheit bewegt hat, wenn der Arbeitsbereich der Überwachungseinheit mit einer Bewegung der Arbeitseinheit veränderbar ist. Hieraus ergibt sich der Vorteil, dass die erhöhte Verfügbarkeit eines Betriebs der Arbeitseinheit erzielbar ist, da der Anwender ein Auslösen eines Sicherheitsalarms durch die Überwachungseinheit aktiv vermeiden kann, indem er eine Kollision mit dem Arbeitsbereich der Überwachungseinheit meidet bzw. ausweicht.

Vorteilhafterweise hat sich die aktuelle Position der Arbeitseinheit in den Sekunden anhand der Prozessdaten in die zukünftige Position der Arbeitseinheit bewegt, so dass der Anwender die zukünftige Position der Arbeitseinheit nach diesen Sekunden ersehen und diese gegebenenfalls meiden bzw. ausweichen kann. Durch den wählbaren zukünftigen Zeitpunkt zwischen den aktuellen Sicherheits- und Prozessdaten und den zu verwendenden zukünftigen Sicherheits- und Prozessdaten für die Erstellung der virtuellen Abbildung kann der Anwender eine für ihn ausreichende und sichere Reaktionszeit einstellen, so dass eine Gefahr einer Kollision völlig ausgeschlossen oder ausreichend minimiert werden kann.

Gemäß einem weiteren bevorzugten Ausführungsbeispiel werden der zukünftige Arbeitsbereich der Überwachungseinheit und die zukünftige Position der Arbeitseinheit durch die Steuereinheit errechnet oder von der Überwachungseinheit und der Steuerung der Arbeitseinheit an die Steuereinheit des Augmented-Reality-Systems übermittelt. Vorteilhafterweise ist die Übermittlung der Sicherheitsdaten der Überwachungseinheit und der Prozessdaten der Arbeitseinheit an die Kommunikationseinheit des Augmented-Reality-Systems mittels Funk. In diesem Zusammenhang umfasst die Kommunikationseinheit einen Sender und einen Empfänger, um die Prozessdaten zu senden bzw. zu empfangen.

Gemäß einem weiteren bevorzugten Ausführungsbeispiel gibt der zukünftige Arbeitsbereich der Überwachungseinheit eine Sichtrichtung der Überwachungseinheit wieder. Hieraus kann der Anwender beispielsweise eine richtige Konfiguration der Überwachungseinheit zu der Arbeitseinheit ersehen, da, wenn die Sichtrichtung der Überwachungseinheit nicht mit einer Bewegungsrichtung der Arbeitseinheit übereinstimmen sollte, die Konfiguration fehlerhaft wäre. Insbesondere, wenn eine Bewegung der Arbeitseinheit mit einer Bewegung der Überwachungseinheit abgestimmt ist, so dass die Überwachungseinheit der Bewegung der Arbeitseinheit synchronisiert voraneilt, um eine Bewegungsbahn der Arbeitseinheit zu überprüfen.

Gemäß einem weiteren bevorzugten Ausführungsbeispiel ist eine Ausweichrichtung oder eine Ausweichroute für den Anwender zur Vermeidung einer Kollision mit der zukünftigen Position der Arbeitseinheit errechenbar und anzeigbar. Damit hilft das Augmented-Reality-System dem Anwender aktiv, eine Kollision mit der Arbeitseinheit sicher zu vermeiden. Vorteilhafterweise weist die Ausweichrichtung auf eine Position hin bzw. führt die Ausweichroute zu einer Position hin, die außerhalb des Arbeitsbereichs der Überwachungseinheit und/oder der zukünftigen Position der Arbeitseinheit liegt, wodurch eine unnötige Abschaltung der Arbeitseinheit durch die Überwachungseinheit vermieden werden kann, wenn der Anwender der Kollision mit der Arbeitseinheit ausweicht.

Gemäß einem weiteren bevorzugten Ausführungsbeispiel umfassen die Sicherheitsdaten der Überwachungseinheit geometrische Daten des Arbeitsbereichs der Überwachungseinheit und die Prozessdaten der Arbeitseinheit Bewegungsdaten der Arbeitseinheit. Insbesondere löst eine Erfassung eines unzulässigen Objektes innerhalb des Schutzraums eine Sicherheitsreaktion der Überwachungseinheit aus und der Überwachungsraum stellt einen gesamten Sichtbereich der Überwachungseinheit dar. Bei einer Erfassung eines unzulässigen Objektes innerhalb des Überwachungsraumes würde somit lediglich eine Warnreaktion der Überwachungseinheit erfolgen. Hierbei könnte die Arbeitseinheit verlangsamt, jedoch nicht abgeschaltet werden.

Gemäß einem weiteren bevorzugten Ausführungsbeispiel ist ein Übergang der Arbeitseinheit anhand der Prozessdaten von der aktuellen Position zu der zukünftigen Position als visuelle Abfolge einer Bewegung der Arbeitseinheit dem Anwender auf der Anzeigeeinheit darstellbar. Hieraus ergibt sich der Vorteil, dass der Anwender nicht nur die aktuelle und zukünftige Position der Arbeitseinheit erkennt, sondern auch eine Bewegungsbahn der Arbeitseinheit zwischen diesen beiden Positionen sieht. Vorteilhafterweise kann die visuelle Abfolge in Form von, vorzugsweise halbtransparenten, Abbildungen der Arbeitseinheit oder in Form eines schematischen Schlauches sein.

Das erfindungsgemäße System kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer realen Umgebung, in der das erfindungsgemäße Augmented-Reality-System verwendet wird; und
- Fig. 2: die schematische Detaildarstellung einer Anzeigeeinheit des erfindungsgemäßen Augmented-Reality-Systems.

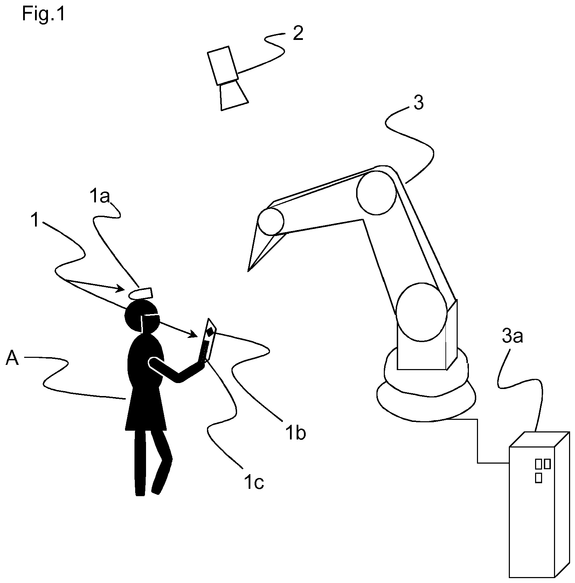

Figur 1 zeigt eine schematische Darstellung einer beispielhaften realen Umgebung, in der ein Anwender A ein erfindungsgemäßes Augmented-Reality-System 1 nutzt, das im Folgenden mit AR-System 1 bezeichnet wird. In der Umgebung hält sich der Anwender A in der Nähe einer Arbeitseinheit 3 auf, die in der Figur 1 beispielshaft als ein Industrieroboter dargestellt ist. In der Umgebung können auch mehr Arbeitseinheiten 3 angeordnet sein bzw. sich befinden. Die Arbeitseinheit 3 ist an einer Steuerung 3a angeschlossen, die die Arbeitseinheit 3 in ihren Abläufen steuert. Die gesteuerten Abläufe der Arbeitseinheit 3 sind als Prozessdaten in der Steuerung 3a hinterlegt. Die Prozessdaten umfassen insbesondere Bewegungsdaten der Arbeitseinheit 3. CAD-Daten der Arbeitseinheit 3 können auch in den Prozessdaten vorgesehen sein, so dass beispielsweise eine maßstabgetreue Abbildung der Arbeitseinheit 3 dargestellt werden kann. Hierbei kann die Arbeitseinheit 3 auch ein fahrerloses Transportsystem oder eine andersartige Verarbeitungsmaschine umfassen. In diesem Zusammenhang werden unter Bewegungsdaten beispielsweise Steuerungsdaten zum Steuern des Roboters oder zum Fahren des fahrerlosen Transportsystems von A nach B verstanden.

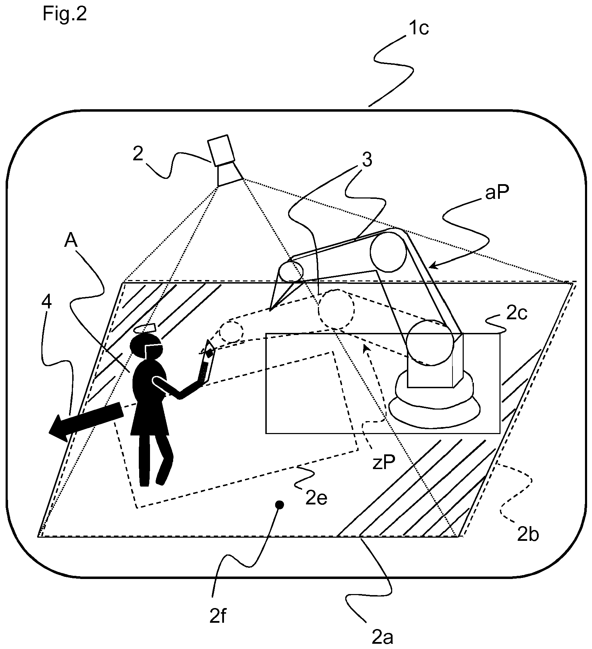

Ferner ist eine Überwachungseinheit 2 in der realen Umgebung angeordnet, die die reale Umgebung und insbesondere die Arbeitseinheit 3 überwacht. Die Überwachung durch die Überwachungseinheit 2 erfolgt anhand von Sicherheitsdaten, die in der Überwachungseinheit 2 hinterlegt sind. Die Sicherheitsdaten umfassen vorzugsweise geometrische Daten bezüglich eines, in der Figur 2 dargestellten, Arbeitsbereichs 2a und 2b der Überwachungseinheit 2. Die Überwachungseinheit 2 kann eine, insbesondere eine Raumtiefe erfassende, Überwachungskamera, einen Scanner, ein Lichtgitter oder eine Lichtschranke umfassen. In dem dargestellten Beispiel ist der Einfachheit halber eine sogenannte 3D-Kamera als einzige Überwachungseinheit 2 gezeigt.

Das vom Anwender A verwendete erfindungsgemäße AR-System 1 umfasst eine Erfassungseinheit 1a, die die reale Umgebung mit der Arbeitseinheit 3 und der Überwachungseinheit 2 erfasst. Die erfasste Information stellt die Erfassungseinheit 1a als Umgebungsdaten bereit. Die Erfassungseinheit 1a umfasst vorzugsweise eine eine Raumtiefe erfassende Kamera und/oder eine Weitwinkel-Kamera, so dass die reale Umgebung großräumig und im Detail erfasst ist. In diesem Zusammenhang werden unter Umgebungsdaten als Daten von der Kamera verstanden, die als Bilddaten zur Verfügung stehen oder in Bilddaten umgewandelt werden können.

Ferner umfasst das AR-System 1 eine Kommunikationseinheit 1b, die die Sicherheitsdaten von der Überwachungseinheit 2 und die Prozessdaten von der Arbeitseinheit 3, insbesondere von der Steuerung 3a der Arbeitseinheit 3, empfängt. Das AR-System 1 umfasst weiterhin eine in der Figur 1 nicht dargestellte Steuereinheit, die die Umgebungsdaten, die Sicherheitsdaten und die Prozessdaten verarbeitet.

Hierbei erstellt die Steuereinheit, wie in der Figur 2 dargestellt, anhand der Umgebungsdaten und der Sicherheitsdaten einen aktuellen Arbeitsbereich 2a der Überwachungseinheit 2 und eine aktuelle Position aP der Arbeitseinheit 3 als eine momentane Abbildung der realen Umgebung. Die momentane Abbildung der realen Umgebung ist mittels der durchgezogenen Linien dargestellt.

Weiterhin erstellt die Steuereinheit anhand der Sicherheitsdaten und der Prozessdaten zu einem zukünftigen Zeitpunkt einen zukünftigen Arbeitsbereich 2b der Überwachungseinheit 2 und eine zukünftige Position zP der Arbeitseinheit 3 als virtuelle Abbildung, wobei der zukünftige Zeitpunkt vorteilhafterweise wählbar sein kann. Die virtuelle Abbildung ist mittels der gestrichelten Linien in der Figur 2 dargestellt. Ferner ist die Steuereinheit in der Figur 2 integriert in dem AR-System 1 angezeigt. Die Steuereinheit kann aber auch separat von dem AR-System 1 angeordnet sein, so dass die errechneten Abbildungen an eine Anzeigeeinheit 1c übermittelt werden.

Die momentane Abbildung (durchgezogene Linien) und die virtuelle Abbildung (gestrichelte Linien) werden in Bezug zueinander dem Anwender A auf der Anzeigeeinheit 1c des AR-Systems 1 angezeigt, wobei ein Abbild des Anwenders A zum Zeitpunkt der Erstellung der momentanen Abbildung in der überlappenden momentanen und virtuellen Abbildung dargestellt ist. Bei der Darstellung der virtuellen Abbildung in der Anzeigeeinheit 1c kann ein Bereich zwischen der aktuellen und der zukünftigen Position aP und zP zusätzlich hervorgehoben sein, beispielsweise schattiert oder farblich markiert, so dass sich der Anwender A visuell einfacher in der Abbildung orientieren kann.

Mit anderen Worten, der das erfindungsgemäße AR-System 1 nutzende Anwender A kann auf der Anzeigeeinheit 1c der AR-Vorrichtung 1 die reale Umgebung, d.h. das Abbild von sich, die Überwachungseinheit 2 mit ihrem momentanen Arbeitsbereich 2a und die Arbeitseinheit 3 in ihrer momentanen Position aP, und eine zu dem Zeitpunkt folgende zukünftige Umgebung, d.h. der zukünftige Arbeitsbereich 2b der Überwachungseinheit 2 und die zukünftige Position zP der Arbeitseinheit 3 zu dem zukünftigen Zeitpunkt, sehen. Hierdurch ist der Anwender A in der Lage, einerseits einen Einblick in den Prozessablauf der Arbeitseinheit 3 zu erhalten und andererseits eine mögliche Kollision mit dem Arbeitsbereich 2a und 2b der Überwachungseinheit 2 und mit der Arbeitseinheit 3 zu vermeiden.

Ferner ist vorteilhafterweise auf der Anzeigeeinheit 1c ein Übergang der Arbeitseinheit 3 anhand der Prozessdaten von der aktuellen Position aP zu der zukünftigen Position zP als visuelle Abfolge einer Bewegung der Arbeitseinheit 3 dem Anwender A dargestellt. Die visuelle Abfolge der Bewegung gibt eine Bewegungsbahn der Arbeitseinheit 3 wieder, wobei die Bewegungsbahn auf der Anzeigeeinheit 1c beispielsweise in Form von halbtransparenten Abbildungen der Arbeitseinheit 3 oder in Form eines schematischen Schlauches abgebildet ist. Hieraus ergibt sich der Vorteil, dass der Anwender A nicht nur die aktuelle und zukünftige Position aP und zP der Arbeitseinheit 3 erkennt, sondern auch die Bewegungsbahn der Arbeitseinheit 3 zwischen diesen beiden Positionen aP und zP klar sieht. Hierdurch kann der Anwender A auch erkennen, ob er sich nicht möglicherweise innerhalb eines Zeitfensters zwischen der momentanen und der virtuellen Abbildung auf Kollisionskurs mit der Arbeitseinheit 3 befindet.

Der zukünftige Zeitpunkt kann als ein Zeitpunkt in mehreren Sekunden der zukünftigen Sicherheits- und Prozessdaten gewählt werden, wobei in diesen Sekunden der aktuelle Arbeitsbereich 2a der Überwachungseinheit 2 sich in eine zukünftige Position des zukünftigen Arbeitsbereichs 2b der Überwachungseinheit 2 bewegt hat, wenn der Arbeitsbereich 2a der Überwachungseinheit 2 mit einer Bewegung der Arbeitseinheit 3 veränderbar sein sollte. In diesen Sekunden hat sich die aktuelle Position aP der Arbeitseinheit 3 anhand der Prozessdaten in die zukünftige Position zP der Arbeitseinheit 3 bewegt. Hierbei ist in der Figur 2 die Arbeitseinheit 3 in der zukünftigen Position zP mit gestrichelten Linien als Unterscheidung zu der Arbeitseinheit 3 in der aktuellen Position aP dargestellt. Es kann auch eine andere Darstellungsart in der Anzeigeeinheit 1c verwendet werden, wie beispielsweise die Verwendung von unterschiedlichen Farben oder eine Volldarstellung der Arbeitseinheit 3 in der aktuellen Position aP und eine halbtransparente Darstellung der Arbeitseinheit 3 in der zukünftigen Position zP.

Durch den wählbaren zukünftigen Zeitpunkt zwischen den verwendeten aktuellen und zukünftigen Sicherheits- und Prozessdaten kann der Anwender für sich ein ausreichend großes Zeitfenster zwischen der momentanen Abbildung und der virtuellen zukünftigen Abbildung einstellen, so dass er sich sicher in der Umgebung bewegen kann.

Erfindungsgemäß ist der Arbeitsbereich 2a und 2b der Uberwachungseinheit 2 in einen Schutzraum 2c und 2e und in einen Überwachungsraum 2f unterteilt, wobei eine Erfassung eines unzulässigen Objektes, wie beispielsweise der Anwender A, innerhalb des Schutzraums 2c und 2e eine Sicherheitsreaktion der Überwachungseinheit 2 auslöst und der Überwachungsraum 2f einen gesamten Sichtbereich der Überwachungseinheit 2 darstellt. Befindet sich der Anwender A in dem Überwachungsraum 2f, kann die Überwachungseinheit 2 eine Warnreaktion ausgeben. Hierbei ist ein direkter Blick des Anwenders A auf die Arbeitseinheit 3 nicht notwendig. Trotz beispielsweise eines Zuwendens des Rückens des Anwenders A zu der Arbeitseinheit 3 in der realen Umgebung, kann der Anwender A über das AR-System 1 alles überblicken und die gesamte Umgebung erfassen.

Mit anderen Worten, hält sich der Anwender A in dem Überwachungsraum 2f der Überwachungseinheit 2 auf, so kann eine Warnung und eine Verlangsamung der Arbeitseinheit 3 als Reaktion erfolgen. Hält sich der Anwender A in dem Schutzraum 2c und 2e auf, so würde eine Abschaltung der Arbeitseinheit 3 als Reaktion erfolgen. Da der Anwender A auf der Anzeigeeinheit 1c des AR-Systems 1 sowohl den zukünftigen Arbeitsbereich 2b der Überwachungseinheit 2 als auch die zukünftige Position zP der Arbeitseinheit 3 erkennt, kann der Anwender A sich ohne Risiko einer Kollision freier bewegen. Vorteilhafterweise werden potentielle Kollisionen durch Warnfarbe in dem AR-System 1 dem Anwender A angezeigt. Hierdurch kann der Anwender A sowohl akustische als auch visuelle Warnungen von dem AR-System 1 erhalten.

Gemäß der Figur 2 ist der Schutzraum 2c mit der Bewegung der Arbeitseinheit 3 mitbewegbar bzw. veränderbar, so dass das AR-System 1 dem Anwender A anzeigt, dass sich der Anwender A in der momentanen Abbildung zwar im Überwachungsraum 2f der Überwachungseinheit 2, aber nicht im Schutzraum 2c der Überwachungseinheit 2 befindet. Hierdurch kann ein Warnsignal an den Anwender A ausgegeben bzw. angezeigt werden. Das AR-System 1 zeigt jedoch in der virtuellen Abbildung an, dass sich die Arbeitseinheit 3 nach dem zukünftigen Zeitpunkt von der aktuellen Position aP in die zukünftige Position zP bewegt haben wird und sich der Schutzraum 2c der Überwachungseinheit 2 von der aktuellen Position ebenfalls in die neue Position des zukünftigen Schutzraumes 2e bewegt haben wird, so dass der Anwender A einerseits mit einer möglichen Kollision mit der Arbeitseinheit 3 rechnen muss und anderseits sich in dem zukünftigen Schutzraum 2e der Überwachungseinheit 2 befinden wird, so dass eine Abschaltung der Arbeitseinheit 3 erfolgen würde.

Vorzugsweise kann das AR-System 1 eine Ausweichrichtung 4 bzw. eine Ausweichroute für den Anwender A errechnen und in der Anzeigeeinheit 1c anzeigen, so dass die Kollision mit der zukünftigen Position zP der Arbeitseinheit 3 und eine Verletzung des zukünftigen Schutzraumes 2e der Überwachungseinheit 2 sicher vermieden werden kann. Hierbei weist die Ausweichrichtung 4 bzw. führt die Ausweichroute vorteilhafterweise auf bzw. zu einer Position hin, die außerhalb des Arbeitsbereichs 2a und 2b der Überwachungseinheit 2 und/oder der zukünftigen Position zP der Arbeitseinheit 3 liegt. Hierdurch stellt das AR-System 1 dem Anwender A eine sichere Ausweichmöglichkeit zur Verfügung, um den Anwender A vor Schaden zu schützen und eine Abschaltung der Arbeitseinheit 3 zu vermeiden.

Das AR-System 1 umfasst vorzugsweise eine Brille, ein Helmdisplay oder ein elektronisches Kommunikationsgerät, wobei das Kommunikationsgerät ein Smartphone oder ein Touchpad sein kann. Das AR-System 1 ist somit sehr handlich und einfach einzusetzen, so dass der Anwender A mit dem AR-System 1 eine hohe Bewegungsfreiheit hat.

Weiterhin können der zukünftige Arbeitsbereich 2b bzw. der zukünftige Schutzraum 2e der Überwachungseinheit 2 und die zukünftige Position zP der Arbeitseinheit 3 durch die Steuereinheit errechnet oder von der Überwachungseinheit 2 und von der Steuerung 3a der Arbeitseinheit 3 an die Kommunikationseinheit 1b übermittelt werden. Hierbei kann die Übermittlung per Funk durchgeführt werden.

### Bezugszeichenliste

- 1: Augmented-Reality-System / AR-System
- 1a: Erfassungseinheit
- 1b: Kommunikationseinheit
- 1c: Anzeigeeinheit
- 2: Überwachungseinheit
- 2a: Aktueller Arbeitsbereich
- 2b: Zukünftiger Arbeitsbereich
- 2c: Aktueller Schutzraum
- 2e: Zukünftiger Schutzraum
- 2f: Überwachungsraum
- 3: Arbeitseinheit
- 3a: Steuerung
- 4: Ausweichrichtung

- A: Anwender
- aP: Aktuelle Position
- zP: Zukünftige Position

## Patentansprüche

1. Augmented-Reality-System (1) zur Überlappung einer erweiterten Realität mit einer realen Umgebung, umfassend
eine Erfassungseinheit (1a), die die reale Umgebung erfasst und als Umgebungsdaten bereitstellt, wobei zumindest eine Überwachungseinheit (2) und zumindest eine Arbeitseinheit (3) in der Umgebung angeordnet sind,
eine Kommunikationseinheit (1b), die Sicherheitsdaten von der Überwachungseinheit (2) und Prozessdaten von der Arbeitseinheit (3) empfängt,
eine Steuereinheit, die die Umgebungsdaten, die Sicherheitsdaten und die Prozessdaten verarbeitet, wobei eine aktuelle Position (aP) der Arbeitseinheit (3) anhand der Umgebungs- und Sicherheitsdaten als eine momentane Abbildung der realen Umgebung erstellbar ist und wobei eine zukünftige Position (zP) der Arbeitseinheit (3) anhand der Sicherheits- und Prozessdaten zu einem, vorzugsweise wählbaren, zukünftigen Zeitpunkt als virtuelle Abbildung erstellbar ist, und eine Anzeigeeinheit (1c), die einem Anwender (A) die momentane Abbildung und die virtuelle Abbildung in Bezug zueinander anzeigt, wobei ein Abbild des Anwenders (A) zu einem aktuellen Zeitpunkt der Erstellung der momentanen Abbildung in der überlappenden momentanen und virtuellen Abbildung dargestellt ist, **dadurch gekennzeichnet, dass** ein aktueller Arbeitsbereich (2a) der Überwachungseinheit (2) in der momentanen Abbildung dargestellt ist, wobei der Arbeitsbereich (2a) der Überwachungseinheit (2) in einen Schutzraum (2c, 2e) und in einen Überwachungsraum (2f) unterteilt ist, und dass ein zukünftiger Arbeitsbereich (2b) der Überwachungseinheit (2) in der virtuellen Abbildung dargestellt ist.

2. Augmented-Reality-System (1) nach Anspruch 1, wobei das Augmented-Reality-System (1) eine Brille, ein Helmdisplay oder ein elektronisches Kommunikationsgerät, insbesondere ein Smartphone oder ein Touchpad, umfasst.

3. Augmented-Reality-System (1) nach Anspruch 1 oder 2, wobei die Erfassungseinheit (1a) eine, insbesondere eine Raumtiefe erfassende, Kamera und/oder Weitwinkel-Kamera umfasst.

4. Augmented-Reality-System (1) nach einem der vorhergehenden Ansprüche, wobei die Überwachungseinheit (2) eine, insbesondere eine Raumtiefe erfassende, Überwachungskamera, einen Scanner, ein Lichtgitter oder eine Lichtschranke umfasst.

5. Augmented-Reality-System (1) nach einem der vorhergehenden Ansprüche, wobei die Arbeitseinheit (3) einen Roboter, ein fahrerloses Transportsystem oder eine Verarbeitungsmaschine umfasst.

6. Augmented-Reality-System (1) nach einem der vorhergehenden Ansprüche, wobei der zukünftige Zeitpunkt in mehreren Sekunden in der Zukunft liegt, nachdem sich der aktuelle Arbeitsbereich (2a) der Überwachungseinheit (2) in eine zukünftige Position des Arbeitsbereichs (2b) der Überwachungseinheit (2) bewegt hat, wenn der Arbeitsbereich (2a, 2b) der Überwachungseinheit (2) mit einer Bewegung der Arbeitseinheit (3) veränderbar ist.

7. Augmented-Reality-System (1) nach Anspruch 6, wobei sich die aktuelle Position (aP) der Arbeitseinheit (3) anhand der Prozessdaten in die zukünftige Position (zP) der Arbeitseinheit (3) nach den Sekunden bewegt hat.

8. Augmented-Reality-System (1) nach einem der vorhergehenden Ansprüche, wobei der zukünftige Arbeitsbereich (2b) der Überwachungseinheit (2) und die zukünftige Position (zP) der Arbeitseinheit (3) durch die Steuereinheit errechnet werden oder von der Überwachungseinheit (2) und der Steuerung (3a) der Arbeitseinheit (3) an die Steuereinheit des Augmented-Reality-System (1) übermittelt werden.

9. Augmented-Reality-System (1) nach einem der vorhergehenden Ansprüche, wobei der zukünftige Arbeitsbereich (2b) der Überwachungseinheit (2) eine Sichtrichtung der Überwachungseinheit (2) wiedergibt.

10. Augmented-Reality-System (1) nach einem der vorhergehenden Ansprüche, wobei eine Ausweichrichtung (4) oder eine Ausweichroute für den Anwender (A) zur Vermeidung einer Kollision mit der zukünftigen Position (zP) der Arbeitseinheit (3) errechenbar und anzeigbar ist.

11. Augmented-Reality-System (1) nach Anspruch 10, wobei die Ausweichrichtung (4) auf eine Position hinweist bzw. die Ausweichroute zu einer Position hinführt, die außerhalb des Arbeitsbereichs (2a, 2b) der Überwachungseinheit (2) und/oder der zukünftigen Position (zP) der Arbeitseinheit (3) liegt.

12. Augmented-Reality-System (1) nach einem der vorhergehenden Ansprüche, wobei die Sicherheitsdaten der Überwachungseinheit (2) geometrische Daten des Arbeitsbereichs (2a, 2b) umfasst und die Prozessdaten der Arbeitseinheit (3) Bewegungsdaten der Arbeitseinheit (3) umfasst.

13. Augmented-Reality-System (1) nach einem der vorhergehenden Ansprüche, wobei eine Erfassung eines unzulässigen Objektes innerhalb des Schutzraums (2c, 2e) eine Sicherheitsreaktion der Überwachungseinheit (2) auslöst und der Überwachungsraum (2f) einen gesamten Sichtbereich der Überwachungseinheit darstellt.

14. Augmented-Reality-System (1) nach einem der vorhergehenden Ansprüche, wobei ein Übergang der Arbeitseinheit (3) anhand der Prozessdaten von der aktuellen Position (aP) zu der zukünftigen Position (zP) als visuelle Abfolge einer Bewegung der Arbeitseinheit (3) dem Anwender (A) auf der Anzeigeeinheit (1c) darstellbar ist.

## Claims

1. Augmented reality system (1) for overlapping an augmented reality with a real environment, comprising
a detection unit (1a) which detects the real environment and makes it available as environment data, wherein at least one monitoring unit (2) and at least one work unit (3) are arranged in the environment,
a communication unit (1b) which receives safety data from the monitoring unit (2) and process data from the working unit (3),
a control unit which processes the environment data, the safety data and the process data, wherein a current position (aP) of the working unit (3) is create-able as a momentary image of the real environment on the basis of the environment and safety data, and wherein a future position (zP) of the working unit (3) is create-able as a virtual image on the basis of the safety and process data at a, preferably selectable, future point in time, and
a display unit (1c) which displays the current image and the virtual image in relation to each other to a user (A), whereby an image of the user (A) at a current time of creation of the current image is displayed in the overlapping current and virtual image,
**characterized in that** a current working area (2a) of the monitoring unit (2) is shown in the current image, wherein the working area (2a) of the monitoring unit (2) is divided into a protective space (2c, 2e) and a monitoring space (2f), and **in that** a future working area (2b) of the monitoring unit (2) is shown in the virtual image.

2. Augmented reality system (1) according to claim 1, wherein the augmented reality system (1) comprises goggles, a helmet display or an electronic communication device, in particular a smartphone or a touchpad.

3. Augmented reality system (1) according to claim 1 or 2, wherein the detection unit (1a) comprises a camera and/or a wide-angle camera, in particular one detecting a spatial depth.

4. Augmented reality system (1) according to one of the preceding claims, wherein the monitoring unit (2) comprises a monitoring camera, in particular one which detects a spatial depth, a scanner, a light grid or a light barrier.

5. Augmented reality system (1) according to one of the preceding claims, the working unit (3) comprising a robot, a driverless transport system or a processing machine.

6. Augmented reality system (1) according to one of the preceding claims, wherein the future point in time lies in several seconds in the future after the current working area (2a) of the monitoring unit (2) has moved to a future position of the working area (2b) of the monitoring unit (2), if the working area (2a, 2b) of the monitoring unit (2) is changeable with a movement of the working unit (3).

7. Augmented Reality System (1) according to claim 6, wherein the current position (aP) of the working unit (3) has moved to the future position (zP) of the working unit (3) based on the process data after the seconds.

8. Augmented reality system (1) according to one of the preceding claims, wherein the future working range (2b) of the monitoring unit (2) and the future position (zP) of the working unit (3) are calculated by the control unit or are transmitted from the monitoring unit (2) and the controller (3a) of the working unit (3) to the control unit of the augmented reality system (1).

9. Augmented reality system (1) according to one of the preceding claims, wherein the future working area (2b) of the monitoring unit (2) reflects a viewing direction of the monitoring unit (2).

10. Augmented reality system (1) according to one of the preceding claims, wherein an alternative direction (4) or an alternative route for the user (A) to avoid a collision with the future position (zP) of the working unit (3) can be calculated and displayed.

11. Augmented reality system (1) according to claim 10, wherein the alternative direction (4) points to a position or the evasive route leads to a position which lies outside the working range (2a, 2b) of the monitoring unit (2) and/or the future position (zP) of the working unit (3).

12. Augmented reality system (1) according to one of the preceding claims, wherein the safety data of the monitoring unit (2) comprises geometrical data of the working area (2a, 2b), and the process data of the working unit (3) comprises movement data of the working unit (3).

13. Augmented reality system (1) according to one of the preceding claims, wherein detection of an impermissible object within the protective space (2c, 2e) triggers a safety reaction of the monitoring unit (2) and the monitored space (2f) represents an entire field of view of the monitoring unit.

14. Augmented reality system (1) according to one of the preceding claims, wherein a transition of the working unit (3) from the current position (aP) to the future position (zP) is representable to the user (A) on the display unit (1c) by means of the process data as a visual sequence of a movement of the working unit (3).

## Revendications

1. Système de réalité augmentée (1) permettant de superposer une réalité augmentée à un environnement réel, comprenant
une unité de détection (1a) qui détecte l'environnement réel et le met à disposition sous forme de données d'environnement, dans laquelle au moins une unité de surveillance (2) et au moins une unité de travail (3) sont disposées dans l'environnement,
une unité de communication (1b) qui reçoit les données de sécurité de l'unité de surveillance (2) et les données de processus de l'unité de travail (3),
une unité de commande qui traite les données d'environnement, les données de sécurité et les données de processus, dans laquelle une position actuelle (aP) de l'unité de travail (3) peut être créée comme image momentanée de l'environnement réel sur la base des données d'environnement et de sécurité, et dans laquelle une position future (zP) de l'unité de travail (3) peut être créée comme image virtuelle sur la base des données de sécurité et de processus à un moment futur, de préférence sélectionnable, et
une unité d'affichage (1c) qui affiche l'image actuelle et l'image virtuelle l'une par rapport à l'autre pour un utilisateur (A), dans laquelle une image de l'utilisateur (A) à un moment donné de la création de l'image actuelle est affichée dans l'image actuelle et virtuelle qui se chevauche,
**caractérisé en ce qu'**une zone de travail actuelle (2a) de l'unité de surveillance (2) est affichée dans l'image actuelle, dans laquelle la zone de travail (2a) de l'unité de surveillance (2) est divisée en un espace de protection (2c, 2e) et un espace de surveillance (2f), et **en ce qu'**une zone de travail future (2b) de l'unité de surveillance (2) est affichée dans l'image virtuelle.

2. Système de réalité augmentée (1) selon la revendication 1, dans lequel le système de réalité augmentée (1) comprend des lunettes, un écran de casque ou un dispositif de communication électronique, en particulier un smartphone ou un pavé tactile.

3. Système de réalité augmentée (1) selon la revendication 1 ou 2, dans lequel l'unité de détection (1a) comprend une caméra et/ou une caméra grand angle, en particulier une caméra détectant une profondeur spatiale.

4. Système de réalité augmentée (1) selon l'une des revendications précédentes, dans lequel l'unité de surveillance (2) comprend une caméra de surveillance, en particulier une caméra détectant une profondeur spatiale , un scanner, une grille de lumière ou une barrière lumineuse.

5. Système de réalité augmentée (1) selon l'une des revendications précédentes, dans lequel l'unité de travail (3) comprend un robot, un système de transport sans conducteur ou une machine de traitement.

6. Système de réalité augmentée (1) selon l'une des revendications précédentes, dans lequel le moment futur se situe dans plusieurs secondes dans le futur après que la zone de travail actuelle (2a) de l'unité de surveillance (2) se soit déplacée vers une position future de la zone de travail (2b) de l'unité de surveillance (2), si la zone de travail (2a, 2b) de l'unité de surveillance (2) est modifiable par un mouvement de l'unité de travail (3).

7. Système de réalité augmentée (1) selon la revendication 6, dans lequel la position actuelle (aP) de l'unité de travail (3) s'est déplacée vers la position future (zP) de l'unité de travail (3) sur la base des données du processus après les secondes.

8. Système de réalité augmentée (1) selon l'une des revendications précédentes, dans lequel la zone future de travail (2b) de l'unité de surveillance (2) et la position future (zP) de l'unité de travail (3) sont calculées par l'unité de commande ou sont transmises de l'unité de surveillance (2) et de la commande (3a) de l'unité de travail (3) à l'unité de commande du système de réalité augmentée (1).

9. Système de réalité augmentée (1) selon l'une des revendications précédentes, dans lequel la zone future de travail (2b) de l'unité de surveillance (2) reflète une direction de visualisation de l'unité de surveillance (2).

10. Système de réalité augmentée (1) selon l'une des revendications précédentes, dans lequel une direction alternative (4) ou une route alternative pour l'utilisateur (A) pour éviter une collision avec la position future (zP) de l'unité de travail (3) est calculable et affichable.

11. Système de réalité augmentée (1) selon la revendication 10, dans lequel la direction alternative (4) indique une position ou la voie de contournement mène à une position qui se trouve en dehors de la zone de travail (2a, 2b) de l'unité de surveillance (2) et/ou de la position future (zP) de l'unité de travail (3).

12. Système de réalité augmentée (1) selon l'une des revendications précédentes, dans lequel les données de sécurité de l'unité de surveillance (2) comprennent les données géométriques de la zone de travail (2a, 2b) et les données de processus de l'unité de travail (3) comprennent les données de mouvement de l'unité de travail (3).

13. Système de réalité augmentée (1) selon l'une des revendications précédentes, dans lequel la détection d'un objet inadmissible dans l'espace de protection (2c, 2e) déclenche une réaction de sécurité de l'unité de surveillance (2) et l'espace surveillé (2f) représente une zone visible entière de l'unité de surveillance.

14. Système de réalité augmentée (1) selon l'une des revendications précédentes, dans lequel une transition de l'unité de travail (3) de la position actuelle (aP) à la position future (zP) peut être affichée à l'utilisateur (A) sur l'unité d'affichage (1c) au moyen des données de processus comme séquence visuelle d'un mouvement de l'unité de travail (3).
